## Europäisches Patentamt
## European Patent Office
## Office européen des brevets

(19)

(11) Numéro de publication: **0 149 859**
**B1**

(12)

# FASCICULE DE BREVET EUROPEEN

(45) Date de publication du fascicule du brevet:
**28.12.88**

(51) Int. Cl.⁴: **G 01 N 21/31, G 02 B 26/02**

(21) Numéro de dépôt: **84201656.0**

(22) Date de dépôt: **08.01.81**

(60) Numéro de publication de la demande initiale en application de l'article 76 CBE: **0033253**

(54) Dispositif de mesure photométrique pour solutions complexes à bruit de fond variable.

(30) Priorité: **23.01.80 FR 8001408**

(43) Date de publication de la demande:
**31.07.85 Bulletin 85/31**

(45) Mention de la délivrance du brevet:
**28.12.88 Bulletin 88/52**

(84) Etats contractants désignés:
**BE CH DE GB IT LI NL SE**

(56) Documents cités:
**FR-A- 2 106 754**
**FR-A- 2 142 525**
**US-A- 3 690 772**
**US-A- 4 088 387**

(73) Titulaire: **COMMISSARIAT A L'ENERGIE ATOMIQUE, 31/33, rue de la Fédération, F-75015 Paris (FR)**

(72) Inventeur: **Boisde, Gilbert, 30, rue Charles de Gaulle, F-91440 Bures sur Yvette (FR)**
Inventeur: **Bonnejean, Claude, Résidence la Ferme du Temple Bat.E 3, F-91130 Ris Orangis (FR)**
Inventeur: **Perez, Jean Jacques, 18, Villa Eugénie, F-92320 Chatillon (FR)**

(74) Mandataire: **Mongrédien, André et al, c/o BREVATOME 25, rue de Ponthieu, F-75008 Paris (FR)**

## Description

La présente invention concerne un dispositif de mesure photométrique permettant d'étudier automatiquement des solutions complexes à «bruit de fond» variable.

De façon plus précise, l'invention concerne un dispositif permettant de déterminer de façon séquentielle ou quasi continue la concentration de plusieurs espèces chimiques, contenues dans une même solution. Ce dispositif permet notamment de suivre les variations de la concentration de ces espèces chimiques, par exemple, lors d'une dilution, d'une réaction chimique, d'une extraction par solvant, d'un appauvrissement de la concentration d'une ou plusieurs espèces dans un bain, etc... Cette solution peut être plus ou moins trouble et/ou peut contenir des espèces chimiques parasites qui constituent un «bruit de fond», variable, ou non. Ces espèces chimiques parasites peuvent, par exemple, résider dans le salissement progressif des parois des cellules, ou cuves de mesure photométrique, par des solutions à étudier, qui ne sont jamais parfaitement limpides ou bien peuvent être des sous-produits de réactions chimiques, par exemple, lors d'un suivi d'une réaction chimique. Ceci est généralement le cas pour des solutions industrielles.

On connaît actuellement de nombreux types de colorimètres, photomètres ou spectrophotomètres, destinés à mesurer la concentration des espèces chimiques en solutions par application de la loi de Beer-Lambert. Les déterminations photométriques à plusieurs longueurs d'ondes ont déjà fait l'objet de diverses protections industrielles et d'appareils commerciaux.

On connaît, de plus, l'analyse photométrique différentielle à deux longueurs d'ondes permettant d'éliminer un «bruit de fond» ou une turbidité, supposé être identique aux deux longueurs d'ondes de mesure. Pour plus de renseignements sur cette mesure différentielle, à deux longueurs d'ondes, on peut se référer, par exemple, au brevet français n° 2 106 754 déposé le 23 septembre 1970 par le COMMISSARIAT À L'ÉNERGIE ATOMIQUE et intitulé «Analyseur photométrique à deux longueurs d'ondes pour le dosage d'éléments dans une solution».

Il existe aussi des dispositifs permettant de connaître au moyen de fibres optiques, pour la mesure à distance, la concentration de n−1 espèces chimiques à l'aide de n longueurs d'onde. Les calculs permettant de connaître la concentration de ces n−1 espèces chimiques et la description de ce dispositif sont décrits dans le brevet n° 2 317 638 déposé le 9 juillet 1975 par le COMMISSARIAT À L'ÉNERGIE ATOMIQUE et intitulé «Dispositif d'analyse des constituants d'une solution par mesure photométrique».

Actuellement, les différents dispositifs destinés à mesurer la concentration d'une espèce chimique en solution utilisent un système de références nécessaire à la détermination de la densité optique, donc de la concentration de cette espèce chimique. Ce dispositif de référence utilise, par exemple, une solution de référence contenant uniquement l'espèce chimique pure ou utilise un «blanc d'échantillonnage» lié au pouvoir absorbant du solvant. Pour une espèce chimique dissoute dans un solvant, en général, le «blanc d'échantillonnage» est fait à partir dudit solvant pur.

De plus, ces dispositifs sont limités quant à leurs utilisations. En effet, dans le cas d'une forte absorption de la lumière par l'espèce chimique, la densité optique ou absorbance liée à cette espèce peut prendre une valeur considérable. La valeur de la densité optique dépend, non seulement du coefficient d'extinction propre à l'espèce chimique, mais encore, de la concentration en solution de cette espèce. Dans ces conditions, on est obligé de faire un prélèvement de solution et d'effectuer des dilutions autant de fois que nécessaire, ceci est généralement le cas pour des solutions industrielles fortement concentrées en une ou plusieurs espèces chimiques.

Afin de permettre une étude directe de la concentration des différentes espèces chimiques en solution, c'est-à-dire d'éviter tout prélèvement de solution, ce qui peut être gênant lors d'un suivi de réaction, il est intéressant de pouvoir faire la détermination de ces concentrations en utilisant un dispositif pouvant travailler, non seulement sur les pics d'absorption, mais encore sur les flancs et même sur les pieds de courbes du spectre d'absorption tracé au préalable. Les dispositifs actuellement connus, tels que ceux décrits dans les documents US-A-3 690 772 et FR-A-2 142 525, sont très mal adaptés à la détermination de densité optique sur les flancs et pieds de courbes.

Par ailleurs, on connaît des dispositifs permettant de discriminer ou distinguer les uns des autres des faisceaux lumineux tels que ceux décrits dans les documents DE-A-2 620 006 et US-A-4 088 387.

La présente invention a pour but de remédier à ces inconvénients et, notamment de permettre la suppression d'un système de références et la possibilité de travailler sur les flancs et pieds de courbes du spectre d'absorption, donc d'éviter tout prélèvement de solution.

La présente invention a pour objet un dispositif de mesure photométrique permettant d'étudier automatiquement, des solutions complexes à «bruit de fond» variable.

De façon connue, le dispositif de l'invention comprend:

— une source lumineuse régulée permettant d'éclairer, au moyen d'une optique adéquate, une cellule de mesure pouvant contenir une solution à étudier;

— des moyens de division du faisceau lumineux issu de la source en n faisceaux lumineux où n est un entier supérieur à 2;

— des moyens d'équilibrage permettant d'équilibrer l'intensité lumineuse des n faisceaux lumineux;

— des moyens pour rendre monochromatiques les n faisceaux lumineux de façon à associer à chacun de ces n faisceaux une longueur d'onde déterminée au préalable;

– des moyens de détection aptes à transformer ce faisceau lumineux reçu en un signal électrique;

– un ensemble de calcul analogique permettant de calculer la concentration de, au plus, n–1 espèces chimiques présentes dans la solution; et

– des moyens de visualisation des résultats.

Ce dispositif se caractérise en ce qu'il comprend, de plus, un discriminateur permettant de distinguer les n longueurs d'onde les unes des autres, ce discriminateur étant formé d'une première pièce apte à tourner par rapport à une deuxième pièce fixe dans laquelle sont logées n fibres optiques, l'une des extrémités de chacune de ces fibres débouchant à l'extérieur de ladite deuxième pièce en regard de la première pièce, la première pièce étant munie d'une ouverture susceptible d'être amenée sélectivement devant ladite extrémité de chacune des fibres optiques, lesdites fibres optiques étant réunies en une fibre optique unique à leur autre extrémité de façon à relier le discriminateur aux moyens de détection constitués alors d'un unique détecteur permettant la détermination de façon séquentielle de la concentration des, au-plus, n–1 espèces chimiques présentes dans la solution à étudier.

Selon un mode préféré de l'invention, l'ensemble de calcul analogique présente un caractère modulaire permettant de calculer une expression de la forme:

$$k \, \text{Log} \, \frac{(I)_\alpha}{(I)_\beta}$$

où k représente un coefficient d'atténuation, $(I)_\alpha$ l'intensité lumineuse de l'un des faisceaux lumineux auquel est associée la longueur d'onde $\lambda_\alpha$ et $(I)_\beta$ l'intensité lumineuse d'un autre faisceau lumineux auquel est associée la longueur d'onde $\lambda_\beta$.

Cette expression mathématique découle d'une simplification de la mesure différentielle mise en œuvre dans le dispositif conforme à l'invention. En effet, l'équilibrage automatique, avant toute mesure, des transmissions optiques initiales $(I_o)_\alpha$ et $(I_o)_\beta$ associées respectivement aux longueurs d'onde $\lambda_\alpha$ et $\lambda_\beta$ tel que:

$$\text{Log} \, \frac{(I_o)_\alpha}{(I_o)_\beta} = 1,$$

évite la mesure d'un «blanc d'échantillonnage» et la compensation d'un zéro d'échelle. En revanche, il est nécessaire d'utiliser une source lumineuse bien régulée afin que sa stabilité relative aux longueurs d'onde soit assurée. Dans ce cas, la densité optique différentielle résultante devient:

$$+\Delta D = D_\alpha - D_\beta = \text{Log} \, \frac{(I)_\beta}{(I)_\alpha}$$

où $D_\alpha$ représente la densité optique associée à la longueur d'onde $\lambda_\alpha$ et $D_\beta$ la densité optique associée à la longueur d'onde $\lambda_\beta$.

Lorsque la mesure d'une espèce chimique présente un pic d'absorption partiellement occulté par un «bruit de fond» variable, généralement la détermination de la densité optique associée à cette espèce est déterminée grâce à la correction dite d'Allen. Dans ces conditions, pour déterminer la densité optique correspondant à l'espèce chimique, on utilise trois longueurs d'onde, une de mesure et deux de référence (on peut se référer au brevet français n° 2 317 638). En général, il est rare que le spectre d'absorption d'une espèce chimique soit symétrique par rapport au pic d'absorption, aussi cette correction, lorsqu'elle est utilisée, reste approximative. En revanche, sa généralisation peut être faite en l'absence de symétrie du spectre d'absorption.

On peut ainsi démonter que de manière générale, quel que soit le choix des longueurs d'onde $\lambda_1$, $\lambda_2$ et $\lambda_3$, la mesure de l'espèce en solution est donnée par:

$$C = K \left[ \text{Log} \, \frac{I_3}{I_2} + k \, \text{Log} \, \frac{I_1}{I_2} \right] ,$$

où C représente la concentration de l'espèce, K un coefficient dépendant du dispositif et de la solution à étudier, et k un coefficient de proportionnalité dépendant des trois longueurs d'onde choisies $\lambda_1$, $\lambda_2$ et $\lambda_3$. Cette expression découle de la loi de Beer-Lambert et de la simplification de la mesure différentielle donnée ci-dessus.

Selon un mode préféré de l'invention, ce dispositif comprend des moyens pour rendre monochromatique chaque faisceau lumineux, qui sont constitués par des filtres interférentiels fixes, correspondant à un intervalle de longueur d'onde $(\lambda \pm \Delta\lambda)$ déterminée et adaptée au type de mesure désiré.

Selon un autre mode préféré de l'invention, ce dispositif comprend des moyens pour rendre monochromatique chaque faisceau lumineux, qui sont constitués par des monochromateurs.

L'utilisation de filtres interférentiels fixes ou de monochromateurs permet de travailler sur n'importe quelle partie du spectre d'absorption et en particulier sur les flancs et pieds de courbe du spectre d'absorption. La mesure différentielle permettant d'éliminer un «bruit de fond» ou une turbidité peut être effectuée entre des flancs ou des pieds de courbes du spectre d'absorption. En conséquence, l'exploitation du spectre d'absorption d'une espèce chimique est possible avec deux ou trois longueurs d'onde, situées du même côté du pic d'absorption. Ceci correspond à l'extrapolation de la correction d'Allen. L'analyse mathématique permet de montrer que la concentration de l'espèce chimique, que l'on cherche à déterminer, est donnée par une expression du même type que celle donnée précédemment. Dans ces conditions, le coefficient d'atténuation k peut être positif ou négatif.

Il est à noter cependant que ce type de correction ne peut être appliqué que pour des espèces spectralement connues. Pour des solutions concentrées, la détermination de la concentration par la mesure en pied de courbe est rigoureuse si la loi de Beer-Lambert est vérifiée aux trois longueurs d'onde choisies et cela, même en présence d'une turbidité ou d'un «bruit de fond» constant. Il en est de même pour un «bruit de fond» variable suivant la loi de Beer-Lambert lorsque l'on utilise des filtres interférentiels ou des monochromateurs, bien adaptés à l'espèce interférente. Dans ce cas, le coefficient K nécessite toujours un préétalonnage.

Ce type de calcul permet la détermination, en pied de courbe, des concentrations d'espèces chimiques dont l'absorbance au niveau du pic d'absorption est trop élevée, ce qui est souvent le cas pour des solutions industrielles où la concentration des espèces chimiques en solution est importante. De plus, ce type de calcul permet l'élimination d'un «bruit de fond» variable ou non pouvant interférer avec l'espèce chimique à doser.

L'utilisation de trois longueurs d'onde permet d'analyser, soit deux espèces chimiques avec déduction de turbidité, soit une seule espèce chimique avec correction d'un «bruit de fond» variable ou non dans la bande spectrale étudiée.

Dans le cas de deux espèces chimiques interférant avec un «bruit de fond» variable, il est nécessaire d'adopter une quatrième longueur d'onde. Dans ces conditions, la concentration de ces deux espèces chimiques est donnée par une expression mathématique, du même genre que celle citée précédemment avec un terme supplémentaire du type:

$$k \, Log \frac{(I)_\alpha}{(I)_\beta}$$

où comme précédemment, $(I)_\alpha$ est l'intensité lumineuse associée à la longueur d'onde $\lambda_\alpha$ et $(I)_\beta$ l'intensité lumineuse associée à la longueur d'onde $\lambda_\beta$. Ceci justifie bien le caractère modulaire de l'ensemble de calcul analogique.

Le dispositif de repérage du faisceau lumineux issu du discriminateur est relié électriquement à l'ensemble de calcul analogique et permet de déclencher les calculs associés audit faisceau.

D'autres caractéristiques et avantages de l'invention ressortiront mieux à l'aide de la description qui va suivre, donnée à titre purement illustratif et non limitatif, en référence aux figures annexées dans lesquelles:

— la figure 1 représente sur un spectre d'absorption quelconque, la correction d'Allen et sa généralisation;

— la figure 2 représente, sur un spectre d'absorption quelconque, l'extrapolation de la correction d'Allen;

— la figure 3 représente un schéma d'ensemble d'un dispositif de mesure photométrique à trois voies;

— la figure 4 représente schématiquement l'ensemble de calcul analogique conformément à l'invention;

— les figures 5 et 6 représentent schématiquement un discriminateur selon l'invention pour un dispositif à trois voies: la figure 5 est une vue en coupe et la figure 6 une vue de dessus; et

— la figure 7 représente schématiquement les différentes positions du discriminateur des figures 5 et 6.

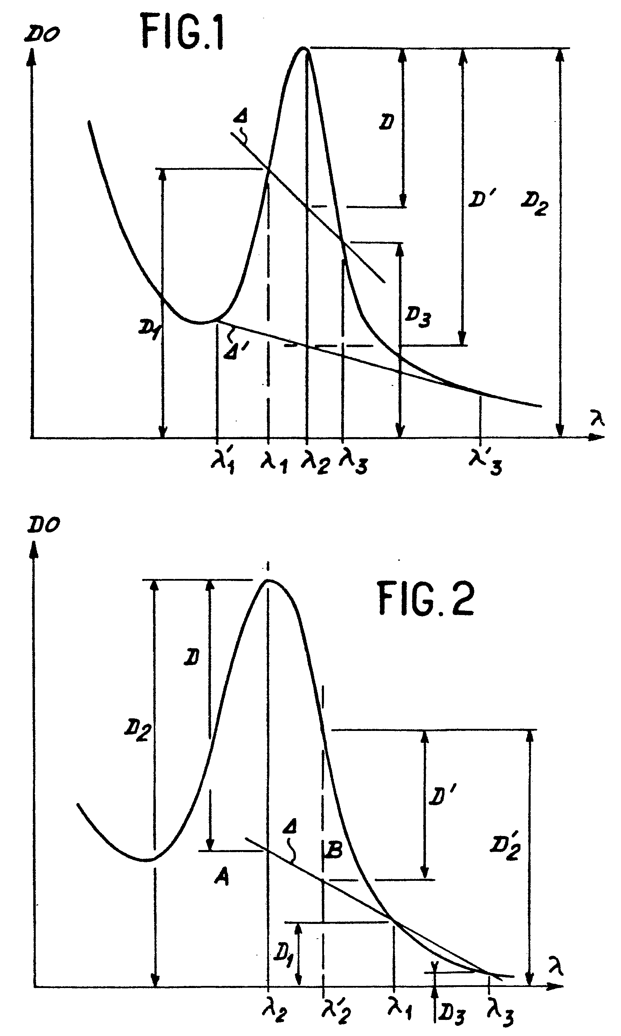

Sur la figure 1, on a représenté un spectre d'absorption donnant la densité optique (D.O) ou absorbance en fonction de la longueur d'onde ($\lambda$). La correction d'Allen consiste à prendre deux longueurs d'onde $\lambda_1$ et $\lambda_3$, choisies à égale distance de part et d'autre du pic d'absorption correspondant à la longueur d'onde $\lambda_2$. Le bruit de fond est assimilé à une fonction linéaire avec la longueur d'onde (droite $\Delta$). En conséquence, la concentration de cette espèce est proportionnelle à la densité optique résultante D telle que:

$$D = D_2 - \frac{D_1 + D_3}{2},$$

avec $D_1$, $D_2$, $D_3$ les densités optiques correspondant respectivement aux longueurs d'onde $\lambda_1$, $\lambda_2$, $\lambda_3$.

La généralisation de la correction d'Allen consiste à faire le même calcul en prenant deux longueurs d'onde $\lambda_1'$ et $\lambda_3'$, choisies de part et d'autre, mais de façon quelconque, de la longueur d'onde $\lambda_2$. Le «bruit de fond» est assimilé à une fonction linéaire avec la longueur d'onde (droite $\Delta'$). La concentration de l'espèce est proportionnelle à la densité optique résultante D'.

Sur la figure 2, on a représenté un autre spectre d'absorption. L'extrapolation de la correction d'Allen consiste à prendre deux longueurs d'onde $\lambda_1$ et $\lambda_3$, situées du même côté du pic d'absorption correspondant à la longueur $\lambda_2$, par exemple, à droite du pic d'absorption et en pied de courbe. La droite $\Delta$ définie par les densités optiques $D_1$ et $D_3$ associées aux longueurs d'onde $\lambda_1$ et $\lambda_3$ est extrapolée jusqu'au point (A). La concentration de l'espèce chimique est alors proportionnelle à la densité optique D. Pour déterminer la concentration de cette espèce, on peut tout aussi bien utiliser la densité optique D', ce qui correspond à l'extrapolation de la droite $\Delta$ jusqu'au point (B) pour une longueur d'onde $\lambda_2'$ pris sur un flanc du pic d'absorption. Ceci peut être utilisé de façon avantageuse lorsque le pic d'absorption n'apparaît pas sur le spectre (espèce très concentrée ou fortement absorbante).

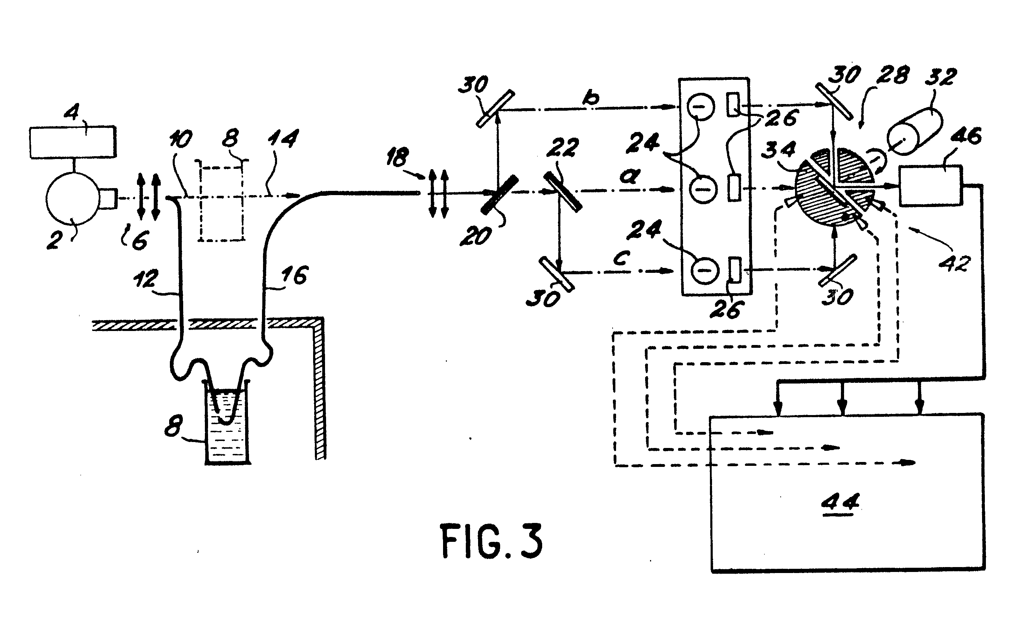

La figure 3 représente un schéma d'ensemble d'un dispositif à trois voies. Une source lumineuse 2, régulée à l'aide d'un dispositif 4 envoie, par l'intermédiaire de lentilles 6, un faisceau de lumière blanche vers une cellule de mesure 8, à remplissage manuel ou à circulation, soit directement 10, soit à l'aide d'une fibre optique 12. La cellule de mesure 8 pouvant contenir la solution à analyser est une cuve optique de conception, soit classique jusqu'à 5 cm de parcours optique, soit spéciale au-dessus de 5 cm. Le faisceau lumineux sortant de la cellule 8 peut être transmis directement 14, ou à l'aide d'une fibre optique 16 permettant, par exemple, des mesures à distance, sur le reste du dispositif. Dans le cas de produits corrosifs, on peut utiliser l'association de fibres optiques souples et rigides (référence brevet français n° 2 317 638).

La lumière issue de la cellule 8 est transformée en taches lumineuses, homogènes, par un système de lentilles 18. Deux lames séparatrices 20 et 22, inclinées à 45° par rapport au faisceau issu de la source permettent de former trois faisceaux lumineux a, b, c. Des systèmes d'équilibrage 24 (coin optique, iris...) permettent d'équilibrer les énergies lumineuses des trois voies. Un ensemble de filtres interférentiels fixes 26, ou de monochromateurs, correctement choisis est placé devant un discriminateur 28 pouvant tourner autour de son axe de façon continue ou non. Les trois faisceaux lumineux a, b, c, sont dirigés sur un discriminateur à trois voies tournant 28 à l'aide de miroirs plans tel que 30. La rotation de ce discriminateur 28 est assurée à l'aide d'un moteur tel que 32.

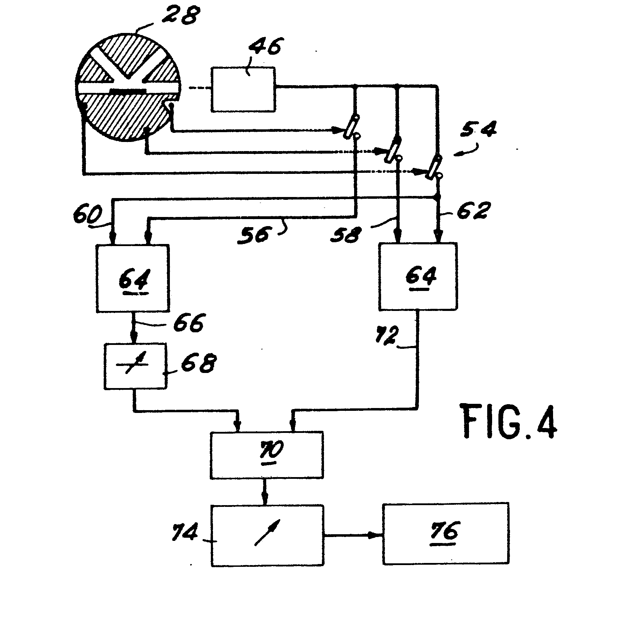

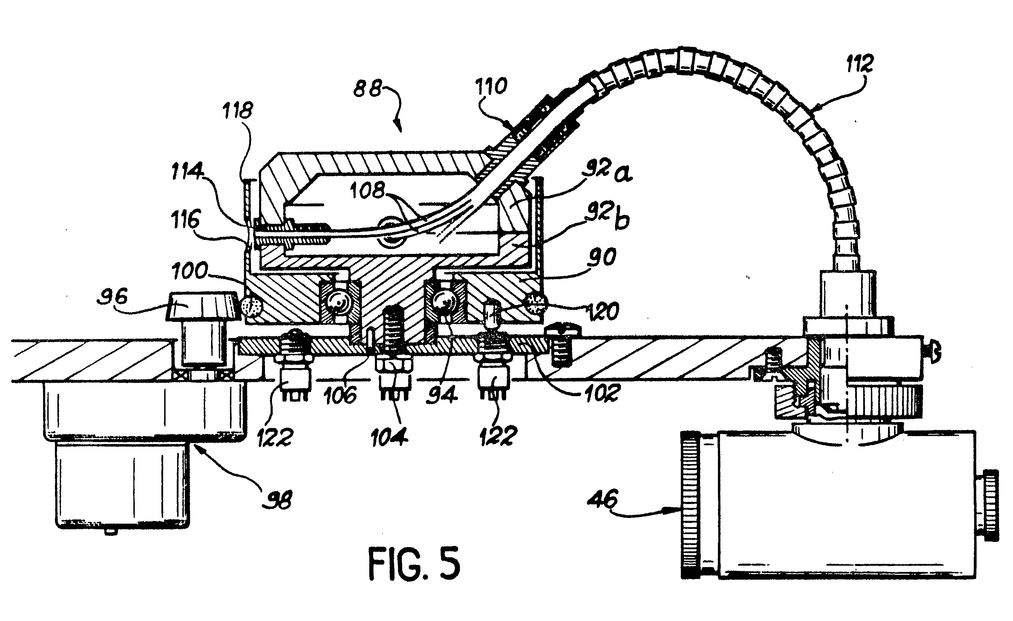

Il est possible de réaliser le discriminateur comme représenté sur les figures 3 et 4, mais la réalisation conforme à l'invention de ce discriminateur est illustrée sur les figures 5 à 7.

Le discriminateur tournant 28 des figures 3 et 4 comprend un dispositif de repérage 42 permettant de repérer le faisceau lumineux sortant dudit discriminateur. Ce dispositif de repérage 42 est relié électriquement à l'ensemble de calcul analogique 44 et permet de déclencher les calculs associés au faisceau lumineux sortant du discriminateur tournant 28. Un unique détecteur 46, apte à transformer la lumière reçue en un signal électrique, est relié à l'ensemble de calcul analogique 44.

Ce type de dispositif photométrique à trois voies permet l'analyse de deux espèces chimiques en solution avec déduction de turbidité, ou bien d'une seule espèce chimique avec correction d'un «bruit de fond» variable ou non.

La figure 5 représente schématiquement l'ensemble de calcul analogique. Le dispositif de repérage, décrit ci-dessus, permet de déclencher les calculs associés au faisceau lumineux sortant du discriminateur 28, au moyen d'interrupteurs tels que 54. Cet ensemble de calcul analogique 44 représenté de façon schématique, permet de calculer les expressions mathématiques du genre de celles données précédemment. Les signaux électriques issus du détecteur 46 correspondant, par exemple à une intensité lumineuse $I_1$ associée à la longueur d'onde $\lambda_1$, arrivent en 56. Les signaux électriques correspondant, par exemple à une intensité lumineuse $I_2$ associée à la longueur d'onde $\lambda_2$, arrivent en 60 et 62. Les signaux électriques correspondant, par exemple, à une intensité lumineuse $I_3$ associée à la longueur d'onde $\lambda_3$, arrivent en 58. Ces signaux électriques sont amplifiés à l'aide d'amplificateurs inverseurs logarithmiques 64. L'expression, par exemple:

$$\text{Log}\,\frac{I_1}{I_2}$$

obtenue ou son inverse arrivant en 66 est multipliée par le facteur d'atténuation k à l'aide d'un multiplicateur 68. L'expression mathématique alors obtenue est additionnée à l'aide d'un sommateur 70 à une expression du type:

$$\text{Log}\,\frac{I_3}{I_2}\ (\text{ou son inverse})$$

arrivant en 72. L'expression obtenue à la sortie du sommateur 70 est alors multipliée par un coefficient K à l'aide d'un multiplicateur 74. Le résultat final obtenu, correspondant à la concentration d'une ou plusieurs espèces chimiques déterminées est alors visualisé à l'aide d'un dispositif 76, par exemple, un enregistreur. Lorsque le discriminateur 28 tourne avec un mouvement continu et après traitement des informations lumineuses par le détecteur 46, puis des informations électriques par l'ensemble de calcul analogique 44, des courbes point par point de variation de la concentration au cours du temps des différentes espèces chimiques, présentes dans la solution à étudier, apparaissent sur l'enregistreur 76.

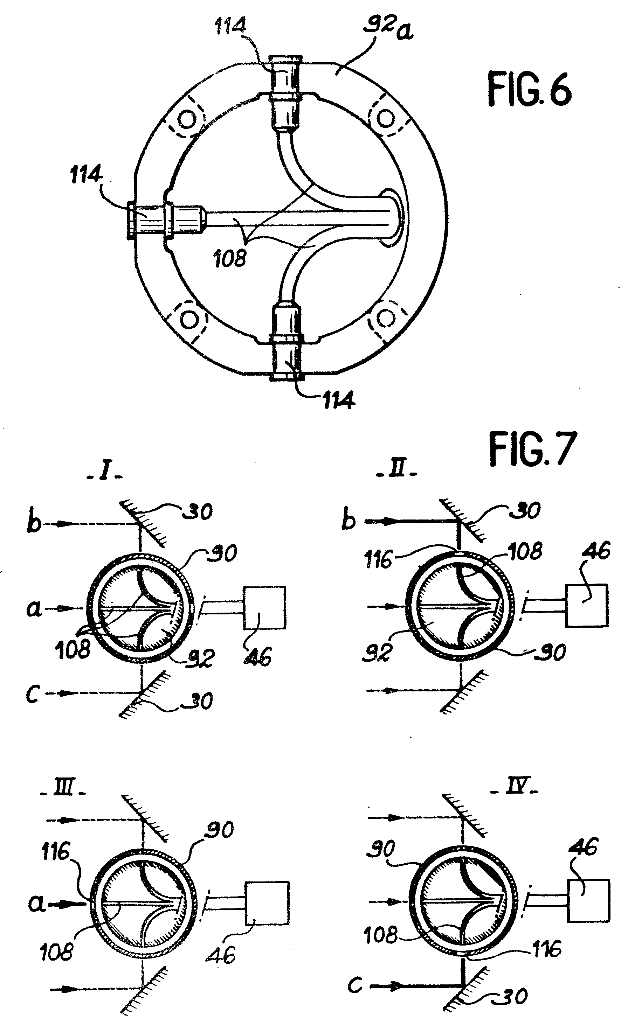

Les figures 5 et 6 représentent conformément à l'invention un discriminateur tournant à trois voies. Ce discriminateur 88 comprend (figure 5) une première pièce 90 apte à tourner par rapport à une deuxième pièce fixe 92, par exemple cylindrique, par l'intermédiaire d'un palier à billes 94 notamment d'un roulement à billes. Une tige 96 reliée à un moto-réducteur 98 permet de mettre en rotation la première pièce 90 et ce par frottement sur un joint torique 100. Dans la deuxième pièce 92, montée sur un plateau 102 amovible au moyen de vis 104 et maintenue en place sur ledit plateau au moyen de doigts 106, sont logées trois fibres optiques telles que 108 dont, l'une de leurs extrémités est connectée, au moyen d'un connecteur approprié 110, à une fibre optique unique gainée 112 aboutissant devant le détecteur 46 et dont les autres extrémités gainées 114 débouchent à l'extérieur de ladite deuxième pièce et en regard de la première pièce 90. Les extrémités 114 peuvent être par exemple disposées radialement (figure 9b). La pièce 92 peut être constituée de deux parties 92a et 92b de façon à faciliter le montage des fibres optiques 108 et 112.

La première pièce 90 est munie d'une ouverture 116 effectuée par exemple sur une partie annulaire 118 de ladite pièce entourant la deuxième pièce 92 et pouvant être amenée sélectivement devant l'extrémité 114 des fibres optiques 108. Lorsque l'extrémité 114 de l'une des trois fibres optiques 108 se trouve en regard de l'ouverture 116, le faisceau lumineux associé à ladite fibre se trouve transmis par l'intermédiaire de la fibre gainée 112, au détecteur 46. Lorsque la pièce 90 est mise en rotation les différents faisceaux lumineux sont ainsi transmis successivement au détecteur 46.

Le repérage du faisceau lumineux sortant du discriminateur 88 peut être effectué au moyen d'un pion 120 solidaire de la pièce tournante 90 venant au contact de l'un des commutateurs 122. Ces commutateurs 122 solidaires du plateau 102 et au nombre de quatre, sont par exemple disposés à 90° l'un de l'autre et en regard de chaque fibre optique. Ces commutateurs 122 sont reliés électriquement à l'ensemble de calcul analogique 44 et permettent de déclencher les calculs associés au faisceau lumineux sortant du discriminateur 88.

La figure 7 représente les différentes positions d'un tel discriminateur.

Sur la figure 7–I, aucun des faisceaux lumineux a, b, ou c n'est transmis au détecteur 46.

La figure 7-II montre le passage du seul faisceau b à travers le discriminateur 88, l'intensité lumineuse dudit faisceau étant reçue par le détecteur 46.

Les figures 7-III et 7-IV montrent respectivement le passage du seul faisceau a et c à travers le discriminateur 88.

Bien entendu, la forme du discriminateur, ainsi que le nombre de voies de celui-ci dépendent du nombre d'espèces chimiques en solution, de l'existence d'un «bruit de fond» ou non, ou de la présence d'une turbidité. Par exemple, un dispositif de mesure à quatre voies permet l'analyse de trois espèces chimiques en solution avec déduction de turbidité, ou bien de deux espèces chimiques avec correction d'un «bruit de fond» variable ou non. De plus, pour un nombre important de voies, plusieurs discriminateurs à 2, 3, 4 etc... voies peuvent être placés en cascade.

Le dispositif conforme à l'invention de conception simple et permettant la mise en œuvre de calculs originaux, permet de déterminer directement en ligne la concentration de plusieurs espèces chimiques présentes dans une même solution, quelles que soient la complexité de cette solution et la concentration des différentes espèces chimiques. La possibilité de travailler pour ce dispositif, sur les flancs et pieds de courbes, où la valeur de la densité optique est plus faible que celle du pic d'absorption, permet l'étude d'espèces chimiques fortement concentrées. La concentration des différentes espèces apparaît sous forme de courbes point par point, lorsque le discriminateur tourne de façon continue. Bien entendu, la distance entre deux points consécutifs dépend de la vitesse de rotation du discriminateur.

Lorsque l'on veut connaître la concentration d'une ou plusieurs espèces chimiques, par exemple, interférant avec un «bruit de fond», ou bien de forte absorbance, il est nécessaire d'étalonner le dispositif de façon à vérifier la linéarité entre l'absorbance et la concentration (loi de Beer-Lambert) et de façon à déterminer les coefficients k d'atténuation (fonction des longueurs d'onde utilisées) et K dépendant du dispositif et de la solution que l'on étudie.

Le dspositif conforme à l'invention a été testé avec de l'uranium VI en milieu nitrique 2N. Après équilibrage des voies, la première correspondant à une longueur d'onde de 418 nanomètres, pour le pic d'absorption, la deuxième à une longueur d'onde de 449 nanomètres pour le flanc et la troisième à une longueur d'onde de 530 nanomètres, on a vérifié la loi de Beer-Lambert pour les rapports $\frac{530}{418}$, $\frac{530}{449}$, $\frac{449}{418}$. La possibilité d'une mesure par filtre interférentiel sur les flancs du pic d'absorption est ainsi confirmée.

Bien sûr, ceci n'est qu'un exemple et l'on aurait pu prendre des longueurs d'ondes différentes et choisies, par exemple, sur un pied de courbe. Les absorbances relatives à 449 et 418 nanomètres d'une part, à 530 et 449 d'autre part sont respectivement de $22,2 \cdot 10^{-3}C$ et $12,3 \cdot 10^{-3}C$ par centimètre de parcours optique, où C est la concentration en gramme par litre.

Le dispositif a aussi été testé avec de l'uranium VI en présence de Fer III, à différentes concentrations, dans une solution nitrique 2N. Il est à noter que le fer III interfère avec l'uranium VI. La détermination du fer III en milieu nitrique 2N montre que la loi de Beer-Lambert est suivie jusqu'à une concentration de 4 g/l, concentration maximale pour les solutions de retraitement. Les absorbances relatives entre 449 et 418 nanomètres d'une part et entre 530 et 449 nanomètres d'autre part donnent respectivement $6,1 \cdot 10^{-3}C$ et $0,2 \cdot 10^{-3}C$, où C est la concentration du Fer III en g/l.

A l'aide de ce qui précède, on peut déduire la concentration d'uranium en présence de fer III. L'application d'un coefficient d'atténuation k à l'absorbance relative la plus élevée de l'élément interférant permet une bonne appréciation de la concentration de l'uranium par résolution de deux équations à deux inconnues:

$$10^3 \cdot D_{418}^{449} = 22,2\, C_U + 6,1\, C_{Fe} \text{ et } 10^3 \cdot D_{449}^{530} + 12,3\, C_U - 0,2\, G_{Fe} \quad \text{ce qui donne:}$$

$$C_U = K \left[ D_{449}^{530} - 0,028\, D_{418}^{449} \right]$$

La conception de l'appareil permet de régler directement le coefficient k = 0,28 par un potentiomètre, puis d'obtenir une inscription en concentration par réglage du coefficient K.

La détermination de la concentration en uranium est obtenue avec une erreur relative de 5% pour une concentration de 1,5 g/l d'uranium VI en présence de 4 g/l de Fer III.

A acidité constante (ou connue), on peut enfin démontrer, et c'est un avantage du dispositif, que la mesure du fer est possible en présence d'uranium. Il suffit d'intervertir les coefficients multiplicateurs suivant la formulation:

$$\text{Log}\, \frac{I_{449}}{I_{418}} + k\, \text{Log}\, \frac{I_{449}}{I_{530}} \text{ avec } k < 1.$$

De même, on a pu démontrer que l'uranium peut être analysé dans des solutions d'acidité variable. Il suffit pour cela de trois longueurs d'onde pour déterminer, d'une part, la concentration en uranium avec correction de l'acidité, et d'autre part, la concentration en nitrates totaux (c'est-à-dire la concentration de l'acide nitrique) par un calcul du type:

$$[NO_3] = K\, \frac{\text{Log}\, \frac{I_3}{I_2} + K_1\, \text{Log}\, \frac{I_1}{I_2} + k_2}{\text{Log}\, \frac{I_1}{I_2} + k_3\, \text{Log}\, \frac{I_3}{I_2} + K_4}$$

Ce calcul est aisé à réaliser à l'aide du dispositif conforme à l'invention, du fait même de sa conception modulaire, précédemment décrite.

**Revendications**

1. Dispositif de mesure photométrique permettant d'étudier automatiquement des solutions complexes à «bruit de fond» variable comprenant:
— une source lumineuse (2) régulée (4) permettant d'éclairer, au moyen d'une optique adéquate (6 et 12), une cellule de mesure (8) pouvant contenir une solution à étudier,
— des moyens de division (20, 22) du faisceau lumineux issu de la source en n faisceaux lumineux où n est un entier supérieur à 2,
— des moyens d'équilibrage (24) permettant d'équilibrer l'intensité lumineuse des n faisceaux lumineux,
— des moyens (26) pour rendre monochromatiques les n faisceaux lumineux, de façon à associer à chacun de ces n faisceaux une longueur d'onde $\lambda_1$, $\lambda_2$, $\lambda_3$ déterminée au préalable,
— des moyens de détection (46) aptes à transformer le faisceau lumineux reçu en un signal électrique,
— un ensemble de calcul analogique (44) permettant de calculer la concentration de, au plus, n−1, espèces chimiques présentes dans la solution, et
— des moyens de visualisation (76) des résultats,
caractérisé en ce qu'il comprend, de plus, un discriminateur (88) permettant de distinguer les n faisceaux lumineux les uns des autres, ce discriminateur étant formé d'une première pièce (90) apte à tourner par rapport à une deuxième pièce fixe (92) dans laquelle sont logées n fibres optiques (108), l'une des extrémités (114) de chacune de ces fibres débouchant à l'extérieur de ladite deuxième pièce en regard de la première pièce, la première pièce étant munie d'une ouverture (116) susceptible d'être amenée sélectivement devant ladite extrémité de chacune des fibres optiques, lesdites fibres optiques étant réunies en une fibre optique (112) unique à leur autre extrémité de façon à relier le discriminateur (88) aux moyens de détection (46) constitués alors d'un unique détecteur permettant la détermination de façon séquentielle de la concentration des, au-plus, n−1 espèces chimiques présentes dans la solution à étudier.

2. Dispositif de mesure photométrique selon la revendication 1, caractérisé en ce que le discriminateur (88) comprend un dispositif de repérage permettant de repérer le faisceau lumineux issu du discriminateur, ce dispositif de repérage étant relié électriquement à l'ensemble de calcul analogique (44) et permettant de déclencher les calculs associés au faisceau réfléchi.

3. Dispositif de mesure photométrique selon l'une quelconque des revendications 1 et 2, caractérisé en ce que les moyens de division du faisceau lumineux issu de la source en n faisceaux lumineux sont constitués par n−1 lames séparatrices (20, 22) disposées l'une derrière l'autre, inclinées à 45° par rapport au faisceau issu de la source (2) et par des miroirs plans (30), permettant de diriger les n faisceaux sur le discriminateur (88).

4. Dispositif de mesure photométrique selon l'une quelconque des revendications 1 à 3, caractérisé en ce que les moyens pour rendre monochromatique chaque faisceau lumineux sont constitués par des filtres interférentiels (26) fixes, correspondant à un intervalle de longueur d'onde $\lambda \pm \Delta\lambda$ déterminé et adapté au type de mesure désiré.

5. Dispositif de mesure photométrique selon l'une quelconque des revendications 1 à 3, caractérisé en ce que les moyens pour rendre monochromatique chaque faisceau lumineux sont constitués par des monochromateurs (26).

6. Dispositif de mesure photométrique selon l'une quelconque des revendications 1 à 5, caractérisé en ce que l'ensemble de calcul analogique (44) présente un caractère modulaire permettant de calculer une expression de la forme:

$$k \, \mathrm{Log} \, \frac{(I)_\alpha}{(I)_\beta}$$

où k représente un coefficient d'atténuation, $(I)_\alpha$ l'intensité lumineuse de l'un des n faisceaux lumineux auquel est associée la longueur d'onde $\lambda_\alpha$ et $(I)_\beta$ l'intensité lumineuse d'un autre faisceau lumineux auquel est associée la longueur d'onde $\lambda_\beta$.

**Claims**

1. Photometric measuring device permitting the automatic investigation of complex solutions with variable «background noise», comprising:
— a regulated (4) luminous source (2) permitting the illumination, by means of an appropriate optical system (6 and 12), of a measurement cell (8) which may contain a solution to be investigated,
— means (20, 22) for dividing the light beam emanating from the source into n light beams, where n is an integer greater than 2,
— balancing means (24) permitting the balancing of the luminous intensity of the n light beams,
— means (26) for making the n light beams monochromatic, in such a manner as to associate with each one of these n beams a wavelength $\lambda_1$, $\lambda_2$, $\lambda_3$ determined in advance,
— detection means (46) capable of converting the received light beam into an electrical signal,
— an analog computing unit (44) permitting the computation of the concentration of, at most, n−1 chemical species present in the solution, and
— means (76) for the visual display of the results, characterized in that it further comprises a discriminator (88) permitting the distinguishing of the n light beams from one another, this discriminator being formed of a first component (90) capable of turning in relation to a second fixed component (92) in which n optical fibres (108) are received, one of the ends (114) of each one of these fibres opening at the exterior of the said second component opposite the first component, the first component being equipped with an opening (116) capable of being brought selectively in front of the said end of each one of the optical fibres, the said optical fibres being combined into a single optical fibre (112) at their oter end in such a manner as to connect the discriminator (88) to the detecting means (46) then consisting of a single detector permitting the determination, in a sequential manner, of the concentration of the, at most, n−1 chemical species present in the solution to be investigated.

2. Photometric measuring device according to Claim 1, characterized in that the discriminator (88) comprises a registering device permitting the registering of the light beam emanating from the discriminator, this registering device being connected electrically to the analog computing unit (44) and permitting the initiation of the computations associated with the reflected beam.

3. Photometric measuring device according to either of Claims 1 and 2, characterized in that the means for dividing the light beam emanating from the source into n light beams consist of n−1 separating plates (20, 22) disposed one behind the other, inclined at 45° in relation to the beam emanating from the source (2), and of plane mirrors (30), permitting the direction of the n beams onto the discriminator (88).

4. Photometric measuring device according to any one of Claims 1 to 3, characterized in that the means for making each light beam monochromatic consist of fixed interference filters (26), corresponding to a wavelength interval $\lambda \pm \Delta\lambda$ determined and adapted to the desired type of measurement.

5. Photometric measuring device according to any one of Claims 1 to 3, characterized in that the means for making each light beam monochromatic consist of monochromators (26).

6. Photometric measuring device according to any one of Claims 1 to 5, characterized in that the analog computing unit (44) exhibits a modular character, permitting the computation of an expression of the form:

$$k \log \frac{(I)_\alpha}{(I)_\beta}$$

where k represents an attenuation coefficient, $(I)_\alpha$ the luminous intensity of one of the n light beams with which light beam the wavelength $\lambda_\alpha$ is associated, and $(I)_\beta$ the luminous intensity of another light beam, with which the wavelength $\lambda_\beta$ is associated.

**Patentansprüche**

1. Fotometrische Messeinrichtung, die die automatische Untersuchung von komplexen Lösungen mit variablem «Hintergrundrauschen» ermöglicht, enthaltend:

eine geregelte (4) Lichtquelle (2), die es erlaubt, mittels einer geeigneten Optik (6 und 12) eine Messzelle (8) zu beleuchten, die eine zu untersuchende Lösung enthalten kann,

eine Teilereinrichtung (20, 22) für das von der Quelle abgegebene Lichtbündel in n Lichtbündel, wo n eine ganze Zahl grösser als 2 ist,

eine Abgleicheinrichtung (24), die erlaubt, die Lichtintensität der n Lichtbündel abzugleichen,

eine Einrichtung (26), um die n Lichtbündel monochromatisch zu machen, um einem jeden dieser n Lichtbündel eine im voraus bestimmte Wellenlänge $\lambda_1$, $\lambda_2$, $\lambda_3$ zuzuordnen,

Detektoreinrichtungen (46), die dazu geeignet sind, das empfangene Lichtbündel in ein elektrisches Signal umzuwandeln,

eine Analogrecheneinrichtung (44), die es erlaubt, die Konzentration von bis zu n−1 Chemikalien, die in der Lösung enthalten sind, zu berechnen, und

eine Anzeigeeinrichtung (76) für die Resultate,

dadurch gekennzeichnet, dass sie darüber hinaus einen Diskriminator (88) enthält, der es ermöglicht, die n Lichtbündel voneinander zu unterscheiden, wobei dieser Diskriminator von einem ersten Teil (90) gebildet ist, das in der Lage ist, gegenüber einem zweiten festen Teil (92) zu drehen, in welchem n optische Fasern (108) angeordnet sind, wobei die Enden (114) einer jeden dieser Fasern ausserhalb des genannten zweiten Teils dem ersten Teil gegenüber enden, wobei das erste Teil mit einer Öffnung (116) versehen ist, die dazu eingerichtet ist, selektiv vor das genannte Ende einer jeden der optischen Fasern gebracht zu werden, welche optischen Fasern in einer einzigen optischen Faser (112) an ihrem anderen Ende vereinigt sind, um den Diskriminator (88) an Detektoreinrichtungen (46) anzuschliessen, die somit von einem einzigen Detektor gebildet sind, der sequentiell die Ermittlung der Konzentration der bis zu n Chemikalien ermöglicht, die in der zu untersuchenden Lösung enthalten sind.

2. Fotometrische Messeinrichtung nach Anspruch 1, dadurch gekennzeichnet, dass der Diskriminator (88) eine Ortungseinrichtung enthält, die es erlaubt, das von dem Diskriminator abgegebene Lichtbündel zu orten, wobei diese Ortungseinrichtung elektrisch mit der Analogrecheneinrichtung (44) verbunden ist und es ermöglicht, die dem reflektierten Lichtbündel zugeordneten Rechenergebnisse auszukoppeln.

3. Fotometrische Messeinrichtung nach einem der Ansprüche 1 und 2, dadurch gekennzeichnet, dass die Teilereinrichtung für das von der Quelle abgegebene Lichtbündel in n Lichtbündel von n−1 Trennlamellen (20, 22) gebildet ist, die hintereinander angeordnet und gegenüber dem von der Quelle (2) abgegebenen Bündel um 45° geneigt sind, sowie durch Planspiegel (30), die es erlauben, die n Bündel auf den Diskriminator (88) zu lenken.

4. Fotometrische Messeinrichtung nach einem der Ansprüche 1 bis 3, dadurch gekennzeichnet, dass die Einrichtungen, um jedes Lichtbündel monochromatisch zu machen, von festen Interferenzfiltern (26) gebildet sind, die einem Wellenlänge-nintervall $\lambda \pm \Delta\lambda$ entsprechen, das nach der gewünschten Messart bestimmt und angepasst ist.

5. Fotometrische Messeinrichtung nach einem der Ansprüche 1 bis 3, dadurch gekennzeichnet, dass die Einrichtungen, um jedes Lichtbündel monochromatisch zu machen, von Monochromatoren (26) gebildet sind.

6. Fotometrische Messeinrichtung nach einem der Ansprüche 1 bis 5, dadurch gekennzeichnet, dass die analoge Recheneinrichtung (44) einen modularen Aufbau aufweist, der es erlaubt, einen Ausdruck der Formel:

$$k \, Log \, \frac{(I)_\alpha}{(I)_\beta}$$

zu berechnen, wobei k einen Dämpfungskoeffizienten darstellt, $(I)_\alpha$ die Lichtintensität eines der n Lichtbündel ist, dem die Wellenlänge $\lambda_\alpha$ zugeordnet ist und $(I)_\beta$ die Lichtintensität eines anderen Lichtbündels ist, dem die Wellenlänge $\lambda_\beta$ zugeordnet ist.

FIG.1

FIG.2

FIG. 3

FIG.4

FIG. 5

114    92a

# FIG.6

114

108

114

# FIG.7

.I.

b → ⟋⟋ 30

90

a →

108    92    46

46

.II.

b → ⟋⟋ 30

116    108    46

92    90    46

.III.

90

116

a →

108    46

.IV.

90

108    116

C → ⟋⟋ 30

19